(19) Europäisches Patentamt
European Patent Office
Office européen des brevets

(11) **EP 4 749 243 A1**

(12) **EUROPEAN PATENT APPLICATION**

(43) Date of publication:
**27.05.2026 Bulletin 2026/22**

(21) Application number: **24214466.5**

(22) Date of filing: **21.11.2024**

(51) International Patent Classification (IPC):
**G01C 19/5726** (2012.01)    **G01C 19/574** (2012.01)
**G01C 19/5712** (2012.01)

(52) Cooperative Patent Classification (CPC):
**G01C 19/574; G01C 19/5712; G01C 19/5726**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Murata Manufacturing Co., Ltd.
Nagaokakyo-shi, Kyoto 617-8555 (JP)**

(72) Inventor: **ONTRONEN, Antti
01690 Vantaa (FI)**

(74) Representative: **Boco IP Oy Ab
Kansakoulukatu 3
00100 Helsinki (FI)**

(54) **CROSSTALK COMPENSATION IN AN FM GYROSCOPE**

(57) A Lissajous frequency-modulated microelectromechanical gyroscope where a control unit is configured transmit drive signals to one or more drive transducers to drive one or more mass elements in a first and a second oscillation mode. The control unit is configured to continuously transmit a first crosstalk compensation signal to the one or more mass elements and to set the amplitude of the first crosstalk compensation signal to a value which is proportional to an amplitude difference in a frequency spectrum obtained from a sense signal retrieved from the one or more mass elements.

Fig. 5

**Description**

FIELD OF THE DISCLOSURE

This disclosure relates to microelectromechanical (MEMS) gyroscopes, and more particularly to frequency-modulated gyroscopes. The present disclosure further concerns crosstalk in such gyroscopes.

BACKGROUND OF THE DISCLOSURE

Most MEMS gyroscopes utilize a proof mass system which is suspended with at least two degrees of freedom so that the proof masses in the system can oscillate in a first oscillation mode and a second oscillation mode which are preferably orthogonal to each other.

In amplitude-modulated (AM) gyroscopes, the proof mass system is actuated into the first oscillation mode by a drive transducer. The driven motion may also be called a drive oscillation mode. The drive transducer excites the drive oscillation mode with a large vibration amplitude. When an amplitude-modulated gyroscope undergoes angular rotation about an input axis, the Coriolis force excites the second oscillation mode. This motion may be called a sense oscillation mode. The amplitude of the sense oscillation is proportional to the angular rotation rate. It can be measured with a sense transducer.

In frequency-modulated (FM) gyroscopes, drive transducers are configured to actuate the proof mass system into both a first and a second oscillation mode with nominally equal amplitudes. In other words, the drive oscillation now comprises both the first and the second oscillation modes - the full drive oscillation motion is a superposition of these two modes.

In FM gyroscopes the drive oscillation has initial oscillation frequencies in both the first and second oscillation modes when the gyroscope is stationary. In Lissajous frequency-modulated gyroscopes, these two frequencies are intentionally separated by a small frequency difference. The Coriolis force shifts these oscillation frequencies away from their initial values when the gyroscope undergoes rotation about the input axis. The angular rotation rate can be inferred from the change in the oscillation frequencies of the proof mass system.

Lissajous frequency-modulated gyroscopes are self-calibrating and can measure the angular rotation rate with a very stable scale factor. However, they are susceptible to crosstalk effects, where a signal intended for generating motion for example in the x-direction also produces some unintended motion in the y-direction, or vice versa. Such effects may arise from nonidealities in the manufacturing process and/or from electrical interaction between the signals which drive the two oscillation modes.

BRIEF DESCRIPTION OF THE DISCLOSURE

An object of the present disclosure is to provide a method and an apparatus for overcoming the above problem.
The object of the disclosure is achieved by a method and an arrangement which are characterized by what is stated in the independent claims. The preferred embodiments of the disclosure are disclosed in the dependent claims. The disclosure is based on the idea of reducing crosstalk in Lissajous FM gyroscopes with a compensation signal.

BRIEF DESCRIPTION OF THE DRAWINGS

In the following the disclosure will be described in greater detail by means of preferred embodiments with reference to the accompanying drawings, in which:

Figures 1a - 1d illustrate mass elements in an FM gyroscope and desired and undesired oscillation modes.

Figures 2a - 2d also illustrate mass elements in an FM gyroscope and desired and undesired oscillation modes.

Figure 3 illustrates simultaneous movement in the first and second oscillation modes.

Figures 4a - 4d illustrate frequency spectra.

Figure 5 illustrates the elements of the gyroscope and signals transferred between them.

Figure 6 illustrates a compensation feedback topology.

Figures 7 names the Bessel functions which correspond to each peak in the frequency spectra.

Figure 8 illustrates a method.

DETAILED DESCRIPTION OF THE DISCLOSURE

A device plane is illustrated and referred to as the xy-plane in the following presentation. The x-direction will also be called the lateral direction, and the y-direction will be called the transversal direction. The x-direction may be orthogonal to the y-direction.

The device plane is determined by a device layer. The device layer may for example be formed in a silicon wafer, which may be called the device wafer or structure wafer. Alternatively, the device layer may be a silicon layer which has been deposited on a substrate. In either case, the mobile microelectromechanical parts (for example mass elements and coupling structures described below) may be formed in the device layer by etching. The device layer itself may be structurally supported by a separate, thicker support wafer or substrate during manufacturing and/or in the finished device.

In the following presentation, the operation of a frequency-modulated (FM) gyroscope will be explained using a four-mass system as an example. However, the compensation method and arrangement presented in this disclosure may equally well be used in an FM gyroscope with one mass element, two mass elements, or any other number of mass elements.

In a one-mass system, the movement of the single mass in the various oscillation modes would correspond to the movement of any single mass presented in the four-mass system below. That is, any of the four masses could be selected as the single mass, and all couplings to other masses would be removed from the device. A two-mass system could be created by selecting any pair of masses from the four-mass system presented below, and removing the couplings to the other two masses. The movement of the selected pair would then correspond to the movement which is presented below.

Furthermore, in the following presentation the movement of the mass elements will be illustrated and described primarily as in-plane movement, that is, movement in the xy-plane. This in-plane motion may, in both the first and second oscillation modes, be linear translation in the xy-plane.

The compensation method and arrangement presented in this disclosure may equally well be used in FM gyroscopes where the mass elements undergo out-of-plane movement. The first oscillation mode may for example comprise linear translation in the direction of the x-axis, and the second oscillation mode may comprise linear translation in the direction of a z-axis which is perpendicular to both the x- and the y-axes.

The compensation method and arrangement presented in this disclosure may equally well be used in FM gyroscopes where the mass elements undergo rotational movement in the first and second oscillation modes. The first oscillation mode may for example comprise out-of-plane rotation about the x-axis, and the second oscillation mode may comprise in-plane rotation about the z-axis. Or the first oscillation mode may comprise rotation about the z-axis and the second oscillation mode rotation about the x-axis.

In all three configurations described above (in plane translation in both the first and second oscillation mode, in plane translation in the first oscillation mode and out-of-plane translation in the second oscillation mode, out-of-plane rotation in first or second oscillation mode and in-plane rotation in the other oscillation mode), the first and second oscillation modes are orthogonal to each other.

The mass elements described in this disclosure may alternatively be called proof masses.

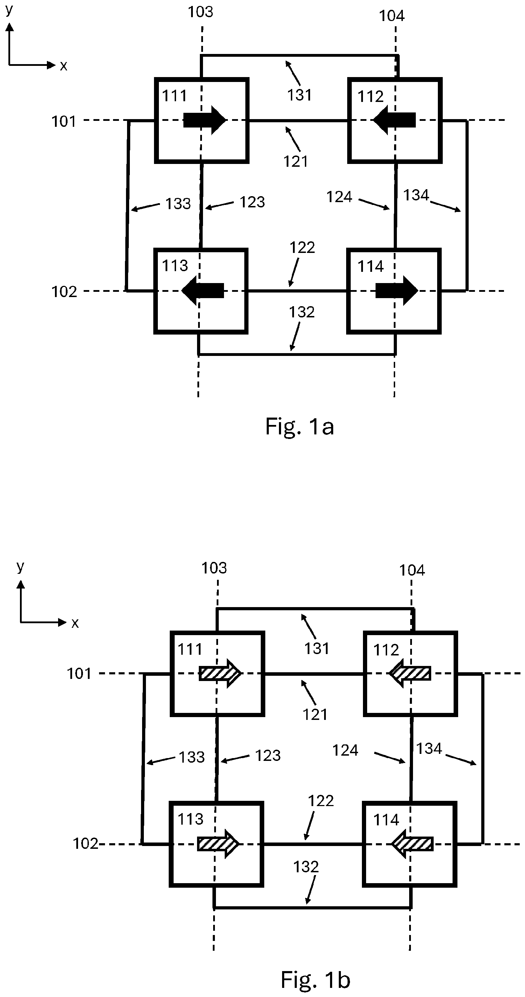

Figure 1a illustrates schematically an FM gyroscope with four mass elements 111 - 114. The mass elements are in this case aligned pairwise on four axes 101 - 104, as the figure illustrates. Mass elements 111 and 112 are aligned on axis 101, mass elements 111 and 113 are aligned on axis 103, and so on. Axes 101 and 102 are parallel to the x-axis and axes 103 and 104 are parallel to the y-axis. Many other mass element geometries and alignments are also possible. The compensation method and arrangement presented in this disclosure is not limited to any particular mass arrangement.

Driving and sensing

The mass elements 111 - 114 may be suspended from an adjacent fixed structure (not illustrated) with flexible suspenders (not illustrated) which allow the mass elements 111 - 114 to move in relation to the fixed structure. The mass elements 111 - 114 may be driven by one or more drive transducers (not illustrated) to oscillate in resonance in a first oscillation mode and in a second oscillation mode. A control unit may transmit drive signals to the drive transducers.

One or more sense transducers (not illustrated) may also be connected to the mass elements 111 - 114 to measure the movement of the mass elements 111 - 114. The control unit may retrieve sense signals from the sense transducers.

These drive and sense transducers may for example be piezoelectric transducers implemented on the suspenders. Alternatively, they may be capacitive transducers formed between the mass elements 111 - 114 and adjacent fixed structures. The compensation method and arrangement presented in this disclosure is not limited to any particular transducer solution.

Coupling structures

The mass elements 111 - 114 are coupled to each other with central coupling structures 121 - 124 and with peripheral coupling structures 131 - 134. Mass elements 111 and 112 are for example coupled to each other with central coupling structure 121 and with peripheral coupling structure 131. These coupling structures are for illustrative purpose shown simply as straight lines in figure 1a.

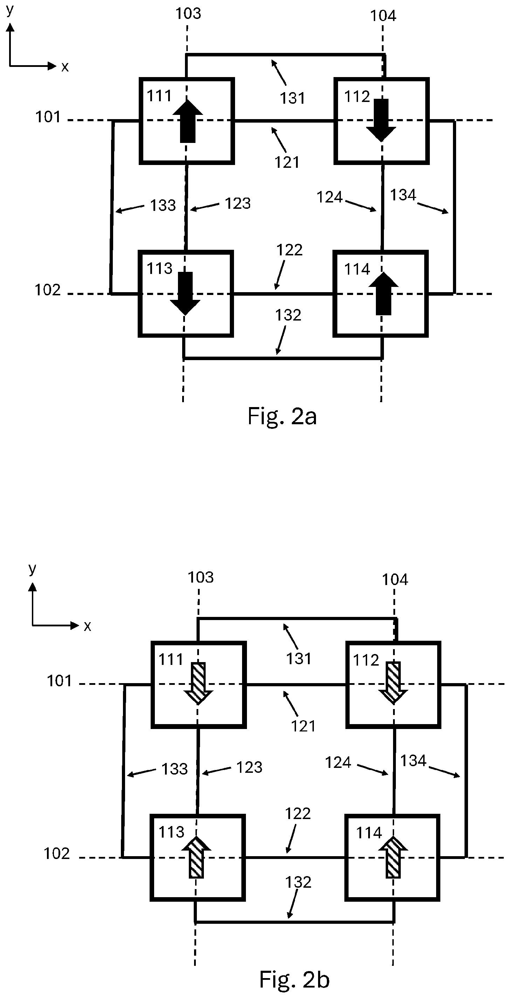

The purpose of all central and peripheral coupling structures may be to flexibly allow the desired oscillation modes. These oscillation modes are shown in figures 1a and 2a below. The purpose of all central and peripheral coupling structures may also be to raise the resonance frequency of undesired oscillation modes, such as the ones shown in figures 1b - 1d and 2b - 2d below. The peripheral coupling structures 131 - 134 may for example be implemented as in-plane seesaws which rotate in the device-plane. They may stiffly resist any movement where the two masses to which they are coupled move in the same direction, as in figures 1b - 1d and 2b - 2d. Similarly, the central coupling structures 121 - 124 may also be implemented as in-plane seesaws which resist movement where the two masses to which they are coupled move in the same direction. The coupling structures 121 - 124 and 131 - 134 may therefore be called anti-phase coupling structures.

The black arrows in figure 1a illustrate mass movement in a first oscillation mode. The central and peripheral coupling structures 121 - 122 and 133 - 134 flexibly accommodate the first oscillation mode where masses 111 and 112 move towards each other on a first lateral axis 101 as masses 113 and 114 simultaneously move away from each other on a second lateral axis 102. In the opposite half of the oscillation cycle, masses 111 and 112 move away from each other while masses 113 and 114 move toward each other. In other words, the mass elements 111 and 112 oscillate in anti-phase along the first lateral axis 101, and the mass elements 113 and 114 oscillate in anti-phase along the second lateral axis 102.

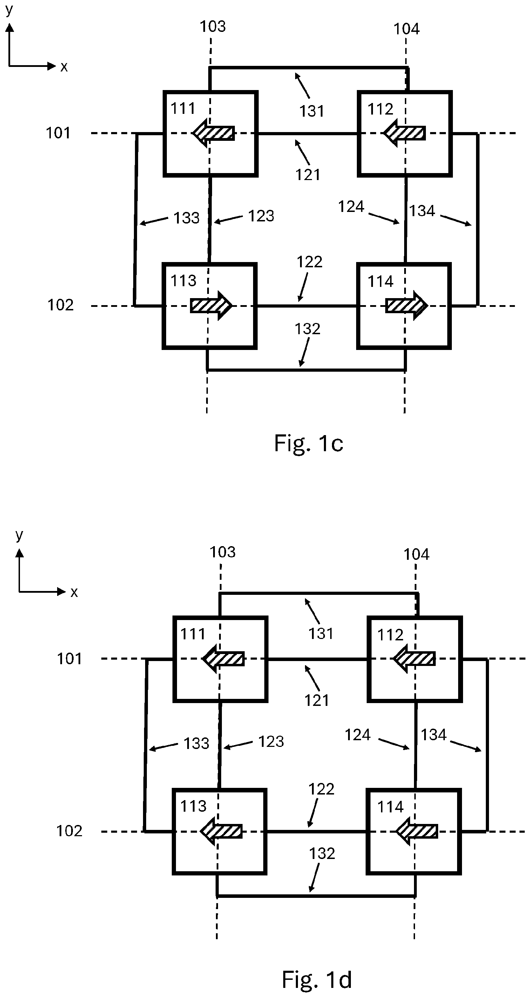

The main purpose of the coupling structures is to stiffly resist undesired oscillation modes. Figures 1b, 1c and 1d illustrate with patterned arrows three undesired oscillation modes where cophasal oscillation occurs. The peripheral coupling structures 133- 134 may be configured to resist the cophasal oscillation shown in figure 1b where both mass element pairs 111+112 and 113+114 oscillate toward each other at the same time. The central coupling structures 121 - 122 may be configured to resist the cophasal oscillation shown in figure 1c, which can be induced by angular acceleration about a z-axis which is perpendicular to the xy-plane. Mass elements 111 and 112 move simultaneously in one lateral direction while 113 and 114 move simultaneously in the other lateral direction. Finally, both the central 121 - 122 and peripheral 133 - 134 coupling structures may be configured to resist the cophasal oscillation induced by linear acceleration in figure 1d, where all four mass elements 111 - 114 move in the same direction.

Figure 2a illustrates mass movement in a second oscillation mode. The central and peripheral coupling structures 123 - 124 and 131 - 132 promote the first oscillation mode where masses 111 and 113 move away from each other on a first transversal axis 103 as masses 112 and 114 simultaneously move toward each other on a second transversal axis 104. In the opposite half of the oscillation cycle, masses 111 and 113 move toward each other while masses 112 and 114 move away from each other. In other words, the mass elements 111 and 113 oscillate in anti-phase along the first transversal axis 103, and the mass elements 112 and 114 oscillate in anti-phase along the second transversal axis 104.

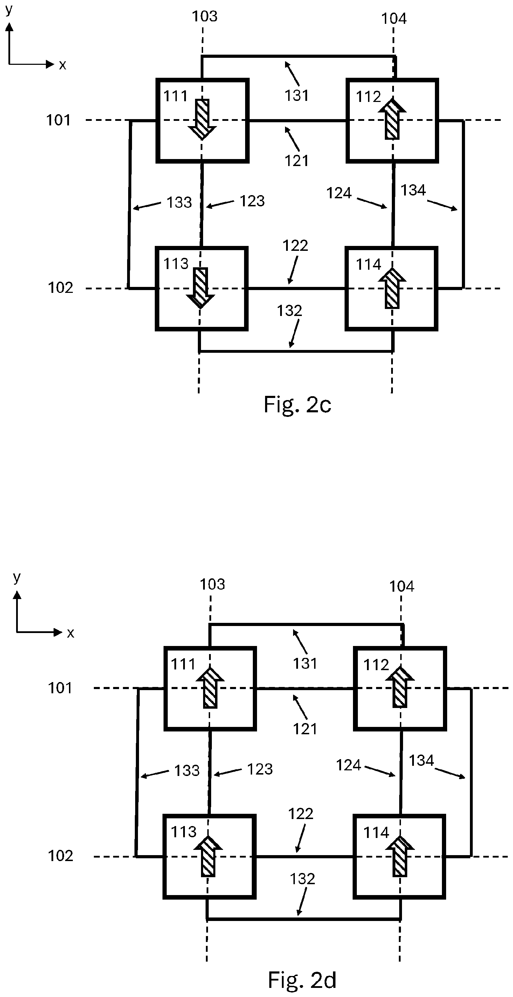

The central and peripheral coupling structures 123 - 124 and 131 - 132 flexibly accommodate the second oscillation mode. Figures 2b - 2d illustrate three undesired oscillation modes. The peripheral coupling structures 131 - 132 may resist the cophasal oscillation shown in figure 2b where both mass element pairs 111+113 and 112+114 move toward each other at the same time. The central coupling structures 123 - 124 may resist the cophasal oscillation shown in figure 2c, where mass elements 111 and 113 move simultaneously in one transversal direction while 112 and 114 move simultaneously in the other transversal direction. And finally, both the central 123 - 124 and peripheral 131 - 132 coupling structures may resist the cophasal oscillation induced by linear acceleration in figure 2d, where all four mass elements 111 - 114 move in the same direction.

Many other coupling solutions are also possible in FM gyroscopes. The compensation method and arrangement presented in this disclosure is not limited to any particular coupling.

Operating principle - drive motion

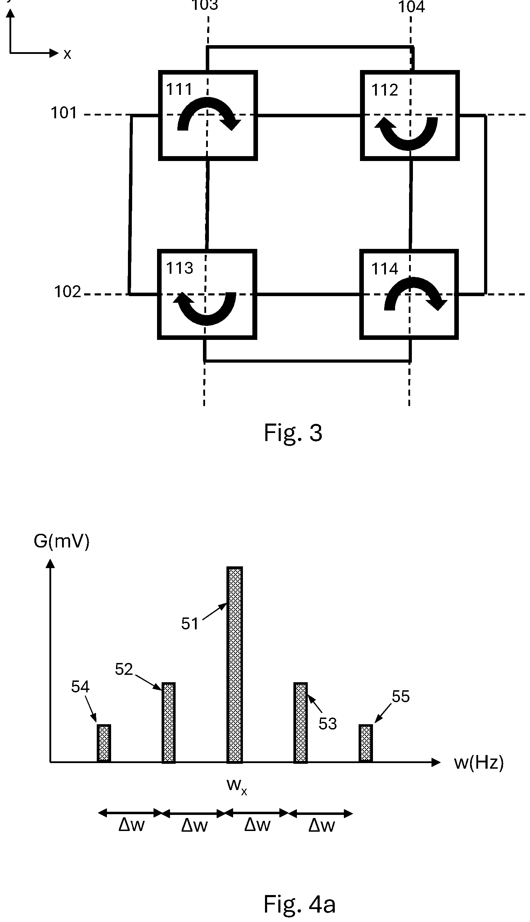

When the drive transducers simultaneously actuate the mass elements 111 - 114 into the first and second oscillation modes, these two movements are superimposed. This is illustrated schematically in figure 3. Deliberate anti-phase driving, reinforced by the anti-phase coupling elements between the mass elements, may for example lead to movement where the movement of mass element 111 (for example) is opposite to that of both 112 and 113, as the figure illustrates.

The gyroscope may comprise a control unit which is configured to transmit a first drive signal to a first set of drive transducers which is configured to drive the first oscillation mode, illustrated in figure 1a. The first drive signal may be written as:

$$V_{x,drive} = A_x \sin(w_x t)$$

Where $V_{x,drive}$ is the first drive signal, $A_x$ is the amplitude of this signal, t is the time variable and $w_x$ is a first drive frequency of the first oscillation mode.

The control unit may also be configured to transmit a second drive signal to a second set of drive transducers which is configured to drive the second oscillation mode, illustrated in figure 2a. The second drive signal may be written as:

$$V_{y,drive} = A_y \sin(w_y t) = A_y \sin(w_x t + \Delta\text{w}t)$$

Where $V_{y,drive}$ is the second drive signal, $A_y$ is the amplitude of this signal, $w_y$ is a second drive frequency and $\Delta$w is a deliberate frequency difference between the first and second drive frequencies. The frequency difference $\Delta$w would ideally remain constant, but it may exhibit some temperature-dependence due to asymmetries in thermal expansion. It may also in some cases drift due to ageing effects when the gyroscope is used.

When these drive signals are employed to drive the first and second oscillation modes, each mass element oscillates in the x- and y-directions at the frequency determined by the first and second drive signals, respectively. Each mass element 111 - 114 in figure moves in a Lissajous curve in the xy-plane.

Measuring the angular rotation rate

When the gyroscope undergoes rotation about an input axis (in this case the z-axis, which is perpendicular to the xy-plane), the oscillation frequencies of each mass element in the x- and y-directions are ideally (if no crosstalk is present) modulated as follows:

$$w_{mod,\,x} \approx w_x + \Omega_z\,\alpha_z \sin \Delta\text{w}t$$

$$w_{mod,\,y} \approx w_x + \Delta\text{w}t + \Omega_z\,\alpha_z \sin \Delta\text{w}t$$

where $\Omega_z$ is the angular rotation rate about the z-axis and $\alpha_z$ is a constant scale factor which depends on the properties of the mass elements, coupling arrangements and sense transducers.

In other words, the angular rotation about the z-axis changes the oscillation frequencies of the mass elements. The angular rotation which the gyroscope experiences introduces an additional modulation with frequency $\Delta$w, which is superimposed with the sinusoidal drive oscillation in the first and second oscillation modes.

The sense transducers measure the oscillation taking place in the x- and y-directions, respectively.

To maintain the mass elements in optimal resonance oscillation, the drive signals which are transmitted to the drive transducers which drive x-oscillation and y-oscillation need to be updated to frequencies $w_{mod,x}$ and $w_{mod,y}$, respectively, whenever the oscillation frequencies are modulated. A feedback loop from the sense transducers to the drive transducers may be implemented for this purpose.

Due to the additional modulation, the sense signals measured by the sense transducers will exhibit a frequency spectrum. For example, a first sense signal measured from the oscillation which occurs in the x-direction will exhibit a spectrum with a central peak in amplitude at the frequency $w_x$ and side peaks at frequencies which are displaced from $w_x$ by $\pm N*\Delta$w, where N is an integer. Similarly, a second sense signal measured in the y-direction may show a spectrum with a central peak in amplitude at the frequency $w_y$ and side peaks at $w_y \pm N*\Delta$w.

It can be seen that the magnitude of the modulation is proportional to the angular rotation rate $\Omega_z$. The amplitudes of the side peaks in the frequency spectrum are therefore also proportional of the angular rotation rate.

The control unit may be configured to determine the angular rotation rate by retrieving a sense signal from the first and/or second sets of sense transducers which are configured to measure the movement of mass elements 111 - 114 in the x- and y-directions, respectively, and to determine the angular rotation rate by demodulating these signals.

Crosstalk

The crosstalk phenomenon will be explained with reference to the preceding figures. However, the phenomenon does not occur only in devices which utilize the mass element and coupling arrangements shown in these figures. It can occur in any FM gyroscope.

Ideally, if the central (121, 122) and peripheral (133, 134) coupling structures are connected to the mass elements 111 - 114 with coupling elements which are flexible in the transversal direction and stiff in the lateral direction, each of these coupling structures will transmit force only in the lateral direction (the x-direction) and dissipate forces which act in the transversal direction (the y-direction). Correspondingly, if the other central (123, 124) and peripheral (131, 132) coupling structures are coupled to the mass elements (111 - 114) with coupling elements which are flexible in the lateral direction and stiff in the transversal direction, each of these coupling structures will transmit force only in the transversal direction and dissipate forces which act in the lateral direction. In this ideal scenario, the movement of the mass elements in the first oscillation mode would always occur completely independently of their movement in the second oscillation mode.

However, it is in practice very difficult to create ideal coupling structures. The movement of the mass elements 111 - 114 in the first oscillation mode will therefore typically not be completely independent of their movement in the second oscillation mode. In other words, some mechanical crosstalk, in the form of forces transmitted in undesired directions through the coupling structures, is inevitable.

Even if only a single mass element is used (and no coupling structures are present), it can be difficult to build suspenders and drive transducers which transmit forces in exactly the right direction (x or y). Even small manufacturing inaccuracies can lead to nonideal diagonal movement where a signal intended for the x-axis also induces a small movement in the y-direction, or vice versa. The first and second oscillation modes will then not be fully independent of each other.

Furthermore, electrical interaction may occur between the first electrical connections which bring the first drive signal to the first set of drive transducers and the second electrical connections which bring the second drive signal to the second set of drive transducers. This can create electrical crosstalk between the two signals, which is directly transmitted to the movement of the mass elements.

Any form of crosstalk can corrupt the frequencies of the sense signal and make the gyroscope output noisy. A sense signal $V_{x,sense,corrupt}$ which has been corrupted by crosstalk (in the absence of external angular rotation) may for example be expressed as:

$$V_{x,sense,corrupt} = A_x \sin(w_x t) + B_x sin(w_y t)$$

Where $B_x$ is a y-to-x crosstalk factor which depends on the magnitude of the crosstalk. The same formula applies for both electrical and mechanical crosstalk. In the former case (electrical crosstalk), the first electrical paths which transmit the first drive signal to the first drive transducers are not perfectly isolated from the second electrical paths which transmit the second drive signal to the second drive transducers. The second signal may therefore leak into the first electrical path and vice versa. A corrupted drive signal therefore arrives in the drive transducers. It contains the original drive signal $A_x sin(w_x t)$ sent by the control unit and an additional signal component $B_x sin(w_y t)$ which arose from electrical crosstalk. The additional signal component is picked up by the sense transducers, which output $V_{x,sense,corrupt}$.

In the latter case (mechanical crosstalk), $A_x \sin(w_x t)$ is an uncorrupted drive signal which arrives in the drive transducers. The corrupted part of the sense signal $B_x sin(w_y t)$ is now generated in the mass element system, as forces intended only for the y-axis also generate unintended movement in the x-direction. In other words, mechanical force which is transmitted to the mass elements creates y-to-x crosstalk. Again, this crosstalk shows up in $V_{x,sense,corrupt}$. Both forms of crosstalk may occur at the same time.

In both situations, the drive signal which was intended for oscillation in the y-direction has an unintended crosstalk effect on the oscillation which occurs in the x-direction.

The sense signal can be rewritten as

$$V_{x,sense,corrupt} = A_x \sin(w_x t) + B_x sin(w_x t + \Delta w t)$$

$$= (A_x - B_x cos(\Delta w)) sin(w_x t) + (B_x sin(\Delta w)) sin(w_x t)$$

$$= \sqrt{A'^2 + B'^2} \, sin(w_x t + \phi)$$

where

$$A' = A_x - B_x cos(\Delta w t)$$

$$B' = B_x sin(\Delta w t)$$

$$\phi = \sin^{-1}\left(\frac{B'}{\sqrt{A'^2 + B'^2}}\right) \approx \frac{B_x}{A_x} sin(\Delta w t) \, when \, B_x \ll A_x$$

When angular rotation occurs, the sense signal measured by a first sense transducer from the movement of the mass elements in the x-direction can now be written as:

$$V_{x.sense.corrupt} = A' sin\left(w_x + \left(\Omega_z\alpha + \frac{B_x}{A_x}\right)sin(\Delta w t)\right)$$

Compared to an uncorrupted sense signal, the corrupted sense signal includes an additional frequency modulation with index $B_x/A_x$ and also a time-dependent amplitude modulation through A'. The phase of the initial demodulation procedure is no longer correct, the gyroscope is not operating at its optimal resonant frequency and the zero-rate offset is increased. All of this makes it difficult to determine $\Omega_z$ from a corrupted sense signal. There is no straightforward way to separate the signal modulation which was caused by angular rotation from the additional modulation effects introduced by crosstalk.

Ageing and thermal effects may also change the crosstalk over time. Consequently, it is more beneficial to implement crosstalk compensation continuously than as a one-time calibration procedure.

The above discussion focused primarily on y-to-x crosstalk, but the same formulas apply also to x-to-y crosstalk when the indices x and y change places.

Crosstalk compensation

It follows from the formula

$$V_{x,sense,corrupt} = A_x \sin(w_x t) + B_x sin(w_y t)$$

that y-to-x crosstalk (whether electrical, mechanical, or both) may be compensated by subtracting a first crosstalk compensation signal $C_x sin(w_y t)$ from the sense signal:

$$V_{x,sense,compensated} = A_x \sin(w_x t) + B_x sin(w_y t) - C_x sin(w_y t)$$

If $C_x$ is equal (or at least approximately equal) to $B_x$, the crosstalk effect can to a large extent be negated by the first crosstalk compensation signal. The angular rotation rate can then be determined by demodulating the compensated sense signal.

The first crosstalk compensation signal $C_x sin(w_y t)$ may alternatively be transmitted to the first drive transducers which drive the first oscillation mode. $C_x$ is the amplitude of the first crosstalk compensation signal.

$$V_{x,drive,compensated} = A_x \sin(w_x t) - C_x sin(w_y t)$$

A second crosstalk compensation signal may be transmitted to the second drive transducers which drive the second oscillation mode, to compensate for x-to-y crosstalk. The frequency of the second crosstalk compensation signal will be $w_x$.

In other words, the first crosstalk compensation signal, and other crosstalk compensation signals described in this disclosure, may be transmitted to the one or more mass elements via the drive transducers. Crosstalk compensation signals may for example be digitally summed to the corresponding drive signals, and the summed signal can be transmitted to the corresponding drive transducer.

As indicated above, the first crosstalk compensation signal may alternatively be digitally summed to the first sense signal retrieved from the first sense transducers. The first sense signal may then be fed back to the control unit and used to adjust the drive signal to ensure that the first drive signal has the correct frequency. Consequently, the first crosstalk compensation signal can be transmitted to the one or more mass elements by summing it to the first sense signal before or during the feedback process. The same conclusions apply to the second sense signal - it can be summed to the second drive signal.

A third option is that the gyroscope may comprise one or more compensation transducers which are connected to the one or more mass elements. The compensation transducers may be dedicated only for generating forces which oppose the forces generated by crosstalk. The drive and sense transducers may be operated as before. In this case, the first crosstalk compensation signal is transmitted to the one or more mass elements via the one or more compensation transducers.

The compensation principle is the same in all three implementations described above.

This disclosure describes a frequency-modulated microelectromechanical gyroscope which comprises one or more mass elements which lie in an xy-plane. The x-axis is perpendicular to the y-axis. The gyroscope also comprises one or more first and second drive transducers and one or more first sense transducers which are connected to the one or more mass elements. The gyroscope also comprises a control unit.

The control unit is configured transmit a first drive signal to the one or more first drive transducers to drive the one or more mass elements in a first oscillation mode. The first drive signal has a first frequency w1.

The control unit is also configured transmit a second drive signal to the one or more second drive transducers to drive the one or more mass elements in a second oscillation mode. The second drive signal has a second frequency w2, and w2 differs from w1. The second oscillation mode is orthogonal to the first oscillation mode.

The one or more first sense transducers are configured to measure the movement of the one or more mass elements in the first oscillation mode. The control unit is configured to retrieve a first sense signal from the one or more first sense transducers. The first sense signal has a first frequency spectrum. The first frequency spectrum comprises a first central peak and two first side peaks. The two first side peaks lie on opposite sides of the first central peak in the first frequency spectrum.

The control unit is configured to continuously:

- transmit a first crosstalk compensation signal to the one or more mass elements,

- set the frequency of the first crosstalk compensation signal to w2,

- set the amplitude of the first crosstalk compensation signal to a value which is proportional to a first amplitude difference between the two first side peaks in the first frequency spectrum.

As explained above, the one or more mass elements may be configured to be mobile in the direction of an x-axis and in the direction of a y-axis. The one or more mass elements may oscillate in linear translation in the direction of the x-axis in the first oscillation mode, and the one or more mass elements oscillate in linear translation in the direction of the y-axis in the second oscillation mode.

Alternatively, the one or more mass elements may be configured to be mobile in rotation about a z-axis which is perpendicular to both the x-axis and the y-axis, and also mobile in rotation about the x-axis. The one or more mass elements may oscillate in rotation about the x-axis in the first oscillation mode, and the one or more mass elements oscillate in rotation about the z-axis in the second oscillation mode.

The following presentation will focus on the former alternative where the mass elements move in linear translation in the first and second oscillation modes. However, the same analysis and conlusions apply directly also to the latter alternative (in-plane rotation and out-of-plane rotation) - only the movement is different.

To maintain consistency with the preceding introduction, the first frequency w1 will in the following presentation be referred to as $w_x$. Similarly, the second frequency w2 will be referred to as $w_y$. However, the general conclusions and formulas apply also to rotational oscillation modes. If the first and second oscillation modes would comprise in-plane rotation and out-of-plane rotation, one of the subscripts x or y may for example be changed to z (to indicate rotation about the z-axis), while the other may remain unchanged (and indicate rotation about that axis).

As explained above, the first drive signal may for example be written as $V_{x,drive} = A_x \sin(w_x t)$, where $A_x$ is a first drive amplitude. The second drive signal may be written as $V_{y,drive} = A_y \sin(w_y t)$, where $A_y$ is a second drive amplitude.

The one or more first drive transducers and one or more first sense transducers may for example be piezoelectric transducers. Alternatively, they may be capacitive transducers. The optional one or more compensation transducers mentioned above may also be either piezoelectric or capacitive.

The one or more mass elements may for example comprise four mass elements which are pairwise aligned on two x-alignment axes which are parallel to the x-axis and on two y-alignment axes which are parallel to the y-axis, as figure 1a illustrates. Each pair of mass elements may be coupled to each other with one or more anti-phase coupling elements.

As explained above, the signals which actually arrive at the drive transducers may contain additional, unintended components due to electrical crosstalk. Alternatively or additionally, crosstalk may be induced into the motion of the mass elements by mechanical forces which are transmitted in unintended directions to and/or between the mass elements. Both of these forms of crosstalk may comprise y-to-x crosstalk (the signal which was intended to drive only y-motion also generates some x-motion) and/or x-to-y crosstalk (the signal which was intended to drive only x-motion also generates some y-motion).

As mentioned earlier, when the gyroscope undergoes rotation about an input axis, the z-axis, which is perpendicular to the xy-plane), the oscillation frequencies of each mass element in the x- and y-directions are modulated by the Coriolis force. That is, the frequencies become time dependent and relative to the angular rate. If no crosstalk would be present, then the magnitude of the angular rotation could be determined by demodulating the first and second sense signals. But a simple demodulation procedure does not suffice if there is crosstalk because the crosstalk disturbance blends in with the angular rotation effect (and can therefore be mistakenly be interpreted as angular rotation).

When a frequency-modulated signal is analyzed in the frequency domain, its spectrum comprises peaks at a central frequency and multiple sidebands. In the case of the first sense signal, the central frequency is $w_x$ - the frequency at

which the first oscillation mode is driven by the first drive signal. Sideband frequencies lie at frequencies $w_x \pm N\Delta w$, where N is an integer.

Figure 4a illustrates schematically the peaks in the first frequency spectrum of the sense signal measured by the first sense transducers. The variable on the G-axis here represents the amplitude of the first sense signal in the frequency domain, which may for example be measured in millivolts. In practice, the first frequency spectrum will also contain other components than the illustrated peaks, at other frequencies. These other components with have smaller amplitudes than the peaks. They have been omitted from the figure for clarity. At least the peaks corresponding to N=1 and N=2 can typically be easily distinguished from these other components.

The spectrum in figure 4a comprises a central peak 51, N=1 sideband peaks 52 and 53 and N=2 sideband peaks 54 and 55. The two first side peaks may lie closest to the first central peak in the first frequency spectrum.. In other words, the first side peaks mentioned above, which are used for adjusting the crosstalk compensation signal, may be peaks 52 and 53. However, another alternative is to use peaks 54 and 55.

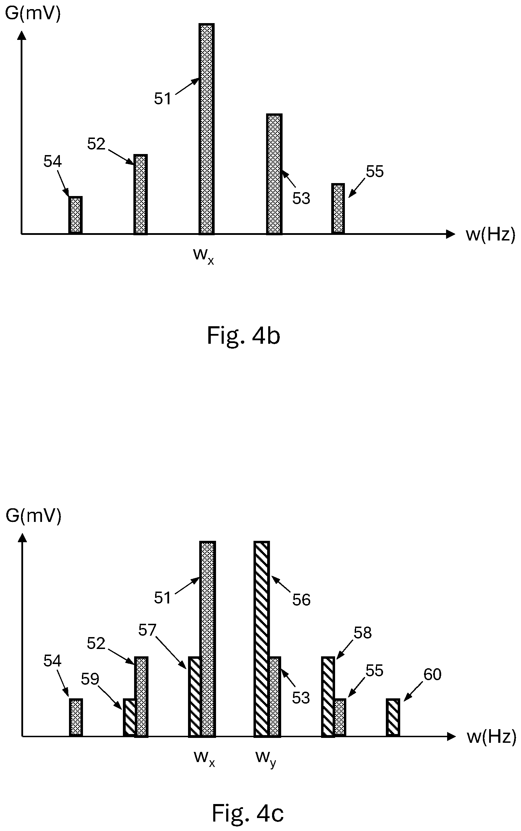

Figure 4a illustrates a first frequency spectrum of a first sense signal which has not been corrupted by crosstalk. Peaks 52 and 53 are equally high, and peaks 54 and 55 also have the same height. Figure 4b illustrates a first frequency spectrum of a first sense signal which has been corrupted by crosstalk. It can be seen that peak 53 is higher than peak 52, and peak 55 is higher than peak 54.

The reason for the difference between figures 4a - 4b can be illustrated by plotting the frequency spectrum of a second sense signal in the same graph. As described in more detail below, the gyroscope may also comprises one or more second sense transducers. The one or more second sense transducers may be configured to measure the movement of the one or more mass elements in the y-direction. The control unit may be configured to retrieve a second sense signal from the one or more second sense transducers. The second sense signal has a second frequency spectrum.

The peaks in this second frequency spectrum are schematically illustrated with striped bars in figures 4c - 4d, together with the peaks 51 - 55 of the first frequency spectrum. Figure 4c illustrates the ideal situation without crosstalk. In the frequency spectrum of the second sense signal, the central frequency is $w_y$ - the frequency at which the second oscillation mode is driven by the first drive signal. Sideband frequencies lie at frequencies $w_y \pm N\Delta w$, where N is an integer. The second frequency spectrum in figure 4c comprises a central peak 56, N=1 sideband peaks 57 and 58 and N=2 sideband peaks 59 and 60.

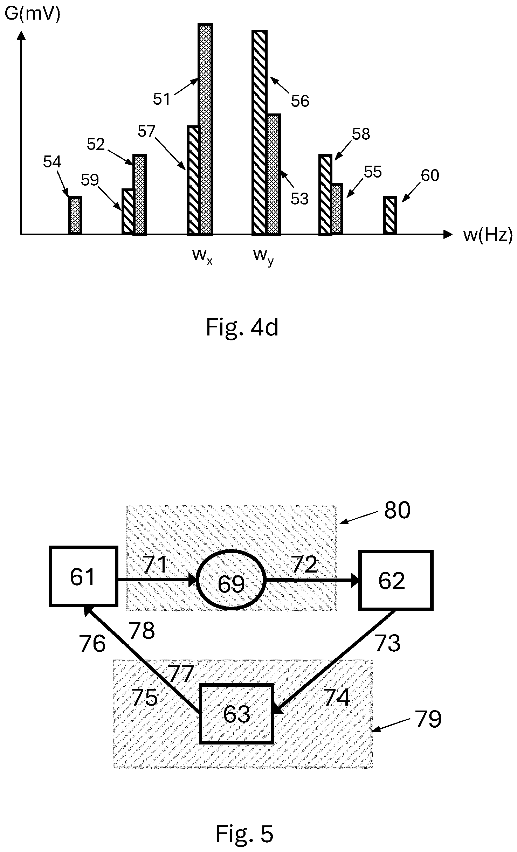

Figure 4d illustrates y-to-x crosstalk and x-to-y crosstalk. The peaks 51 - 55 in the first frequency spectrum are the same ones that were shown in figure 4b. The heights of the peaks 56-60 in the second frequency spectrum differ from their heights in figure 4c.

Due to y-to-x crosstalk, the peak 53 which lies at frequency $w_y$ in the first frequency spectrum becomes higher than the peak 52 in this example. Peak 55 also becomes higher than peak 54. In other words, the strong signal which was intended to drive the second oscillation mode in the y-direction leaks into the oscillation which occurs in the x-direction. Due to x-to-y crosstalk, the peak 57 which lies at frequency $w_x$ in the second frequency spectrum becomes higher than the peak 58, and peak 59 becomes higher than peak 60.

The height difference between peaks 52 and 53 and the height difference between peaks 54 and 55 depend on the magnitude of y-to-x crosstalk. Conversely, the magnitude of the y-to-x crosstalk can at any moment be estimated from the height difference between either of these peak pairs. A preferred estimate for the amplitude $C_x$ of the first crosstalk compensation signal $C_x\sin(w_y t)$ can be obtained by making it proportional to the amplitude difference between peaks 52 and 53, for example. This proportionality may for example be direct proportionality, so that $C_x = L_1*(H_{53} - H_{52})$, where $L_1$ is a first constant, $H_{53}$ is the height of peak 53 in the first frequency spectrum and $H_{52}$ is the height of peak 52 in the first frequency spectrum. Another preferred estimate for the amplitude $C_x$ can be obtained by expressing the first amplitude difference as a ratio, for example so that $C_x = L_2*(H_{53} / H_{52})$, where $L_2$ is a second constant.

As mentioned earlier, the compensated first sense signal can be written as:

$$V_{x,sense,compensated} = A_x \sin(w_x t) + B_x sin(w_y t) - C_x sin(w_y t)$$

Crosstalk compensation could be performed as a one-time procedure when the device is manufactured. In other words, the first frequency spectrum could be determined in a calibration procedure, the amplitude $C_x$ could be determined in the calibration, and the first crosstalk compensation signal $C_x\sin(w_y t)$ could then be applied with the same amplitude $C_x$ for the entire lifetime of the device. However, the crosstalk is likely to change over time due to ageing effects and temperature effects. Better compensation results can therefore be obtained by continuously updating the first crosstalk compensation signal.

The control unit may therefore continuously transmit the first crosstalk compensation signal to the one or more mass elements and update its amplitude and frequency as this disclosure describes. Ideally, the first crosstalk compensation signal $C_x\sin(w_y t)$ will then perfectly match the disturbance $B_x\sin(w_y t)$ produced by y-to-x crosstalk (whether electrical, mechanical, or a combination of them both) and therefore negate the y-to-x crosstalk effect. The frequency modulation which remains in the first sense signal after compensation in the first frequency spectrum will then be due to angular rotation. The same applies to the second sense signal, assuming that a second compensation signal is used, as described below. The magnitude of the angular rotation can be determined by demodulating the first and second sense signals.

The control unit may be configured to continuously measure and/or calculate the height asymmetry (first amplitude difference) between the first side peaks (for example peaks 52 and 53) in the first frequency spectrum. To calculate the first amplitude difference, the control unit may for example subtract $H_{52}$ from $H_{53}$ or subtract $H_{53}$ from $H_{52}$. Alternatively, the control unit may divide $H_{52}$ by $H_{53}$ or divide $H_{53}$ by $H_{52}$. The control unit may set the amplitude of the first crosstalk compensation signal to a value which is proportional to the first amplitude difference.

Based on this information, the control unit may continuously update the amplitude $C_x$ of the first crosstalk compensation signal $C_x \sin(w_y t)$. The frequency of the first crosstalk compensation signal is set to $w_y$. The momentary value of $w_y$ may be determined from the second sense signal, and this the frequency of the first crosstalk compensation signal may be set to this value.

The amplitude $C_x$ of the first crosstalk compensation signal may for example be dynamically updated by continuously integrating the residual error of $B_x - C_x$, which is proportional to $H_{53} - H_{52}$. No further adjustments are needed if the integral of the residual error is zero. The amplitude of the first crosstalk compensation signal may then simply be maintained at the same value. If the integral of the residual error is nonzero, this indicates that the crosstalk has changed (for example due to temperature or ageing).

The amplitude of the first crosstalk compensation signal may be increased (or decreased, if the crosstalk has been reduced) to a new value. When the crosstalk compensation is correct, the integral of the residual error returns to a zero value.

In other words, the control unit may be configured to dynamically update the amplitude of the first and second crosstalk compensation signals. In this dynamic adjustment the control unit does not necessarily need to calculate the exact values of the constant $L_1$ or $L_2$, mentioned above. It may simply adjust the amplitude until the integral returns to zero.

Figure 5 illustrates elements of the gyroscope and the signals transferred between them. A digital signal domain 79 is illustrated with a first striped pattern, an analog (voltage) signal domain is illustrated with a white background, and a mechanical domain 80 where mass element movement occurs is illustrated with a second striped pattern. The gyroscope may comprise an AD signal converter at each crossing between the digital and analog domains. Drive and sense transducers form the interface between the analog and mechanical domains.

The control unit 63 transmits a first drive signal 75/76 to one or more first drive transducers 61. These drive transducers generate a driving mechanical force 71 which moves the one or more mass elements 69 in the first oscillation mode. The actual movement of the mass elements (which may include movement generated by the first drive signal, movement induced by the Coriolis force and movement induced by y-to-x crosstalk) generates a sensable mechanical force 72 which acts on the one or more first sense transducers 62. These sense transducers convert the sensable mechanical force 72 into a first sense signal 73/74 which is transmitted to the control unit 63. The control unit then also transmits a first crosstalk compensation signal 77/78 to the first drive transducers 61. The first crosstalk compensation signal may be summed with the first drive signal 75/76 in the digital domain or in the analog domain, so that the two signals are superimposed when they reach the one or more first drive transducers.

As explained earlier, the first crosstalk compensation signal could alternatively be transmitted to separate compensation transducers, or summed to the first sense signal 74.

As indicated above, the gyroscope may also comprise one or more second sense transducers. The one or more second sense transducers may be configured to measure the movement of the one or more mass elements in the second oscillation mode. The control unit may be configured to retrieve a second sense signal from the one or more second sense transducers. The second sense signal has a second frequency spectrum. The second frequency spectrum comprises a second central peak and two second side peaks. The two second side peaks lie on opposite sides of the second central peak in the second frequency spectrum.

The control unit may also be configured to continuously transmit a second crosstalk compensation signal to the one or more mass elements, and to set the frequency of the second crosstalk compensation signal to w1. The control unit may also be configured to set the amplitude of the second crosstalk compensation signal to a value which is proportional to a second amplitude difference between the two second side peaks in the second frequency spectrum.

All options that were presented above with reference to the first crosstalk compensation signal are also possible for the second crosstalk compensation signal. The compensated second sense signal can be written as:

$$V_{y,sense,compensated} = A_y \sin(w_y t) + B_y \sin(w_x t) - C_y \sin(w_x t)$$

Where $A_y$ is the amplitude of the second drive signal, $B_y$ is the x-to-y crosstalk amplitude and $C_y$ is the amplitude of the second crosstalk compensation signal. The amplitude $C_x$ can be determined in the same manner as the first crosstalk compensation signal, except that the procedure is performed on the peaks of the second frequency spectrum instead of the first, and any reference to x in the earlier explanation is replaced with a reference to y, and references to y are replaced with references to x.

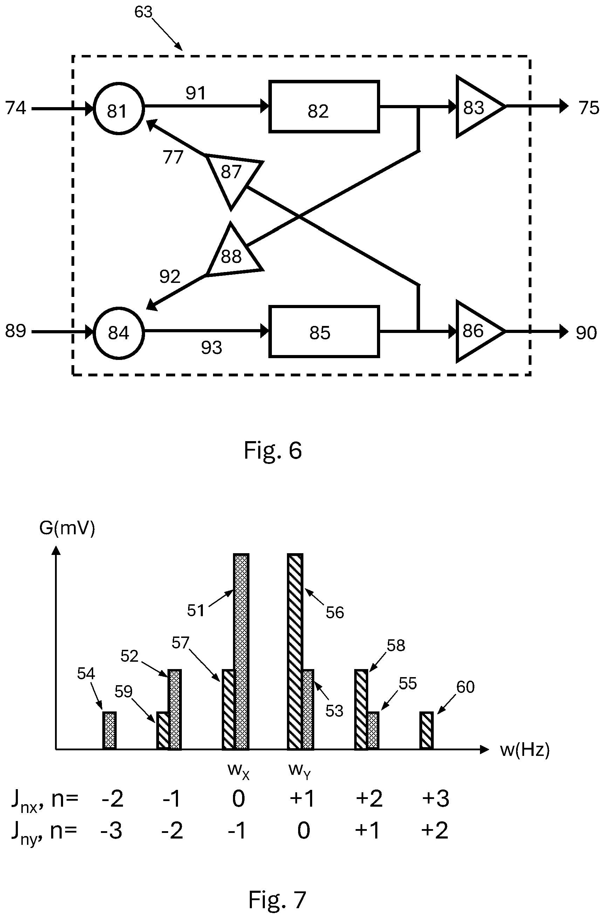

Figure 6 illustrates a compensation feedback topology for implementing the compensation arrangement in the control unit described in this disclosure. The control unit retrieves the first sense signal 74 and the second sense signal 89 from the sense transducers. Each signal is transmitted to a phase-locked loop (82, 85) where the frequency and phase of the corresponding sense signal is continuously monitored. This frequency and phase information is fed back to the elements 83 and 86 which generate the first and second drive signals 75 and 90, respectively, so that the frequencies of these signals match the oscillation which is currently taking place.

The angular rotation rate is determined by demodulating the first and second sense signals. This procedure has not been illustrated in figure 6. Instead figure 6 illustrates the setting of the amplitude and frequency of the first crosstalk compensation signal 91 in element 87, and the setting of the amplitude and frequency of the second crosstalk compensation signal 92 in element 88. These steps are performed in elements 87 and 88 by analyzing the frequency spectra of signals 74 and 90 as this disclosure describes.

In figure 6 the first crosstalk compensation signal 77 is added to the first sense signal 74 in element 81 to produce a first compensated sense signal 91, and the second crosstalk compensation signal 92 is added to the second sense signal 89 in element 84 to produce a second compensated sense signal 93. This allows the angular rotation to be determined from compensated signals. The compensation is also transmitted to the mass elements via elements 83 and 86 in the control unit 63. As mentioned earlier, the first and second crosstalk compensation signals 77 and 92 can also be transmitted by other means.

The relationship between the first amplitude difference between the two first side peaks and the magnitude of crosstalk can be explained with Bessel functions of the first kind. These Bessel functions describe the amplitude of the sidebands in the frequency spectra of frequency-modulated signals. Figure 7 illustrates the numbering of the Bessel functions that correspond to the different peaks in the first ($w_x$, $J_{nx}$) and second ($w_y$, $J_{ny}$) frequency spectra.

The amplitude difference $H_{53}$ - $H_{52}$ may be written as:

$$H_{53} - H_{52} = A_x J_{+1}(w_x) - A_x J_{-1}(w_x) + B_x J_0(w_y) - B_x J_{-2}(w_y),$$

where the first two terms express the amplitudes that would be expected for peaks 53 and 52 if no crosstalk was present, and the final two terms express the influence of crosstalk on the amplitudes of peaks 53 and 52. The subtraction in the first two terms yields a zero result. $J_0$ is approximately equal to 1 and $J_{-2}$ is much less than $J_0$. Consequently, $H_{53}$ - $H_{52}$ is approximately equal to $B_x$.

Conversely, the x-to-y crosstalk factor $B_y$ will be approximately equal to the amplitude difference $H_{57}$ - $H_{58}$ because:

$$H_{57} - H_{58} = A_y J_{-1}(w_y) - A_y J_{+1}(w_y) + B_y J_0(w_x) - B_x J_{+2}(w_x) \approx B_y.$$

Again, the first two terms yield zero, and $J_{+2}$ is much less than $J_0$. Consequently, good values for $C_x$ and $C_y$ can be obtained by studying the amplitude difference between the side peaks, as this disclosure describes.

This disclosure also describes a method for compensating crosstalk effects in a frequency-modulated microelectromechanical gyroscope. The method comprises transmitting a first drive signal to one or more first drive transducers which drive one or more mass elements in the gyroscope in a first oscillation mode, so that the one or more mass elements oscillate in the first oscillation mode. The first drive signal has a first frequency w1.

The method also comprises transmitting a second drive signal to one or more second drive transducers which drive the one or more mass elements in a second oscillation mode, so that the one or more mass elements oscillate in the second oscillation mode. The second drive signal has a second frequency w2. w2 differs from w1. The second oscillation mode is orthogonal to the first oscillation mode.

The method also comprises retrieving a first sense signal from one or more first sense transducers which are connected to the one or more mass elements. The one or more first sense transducers are configured to measure the movement of the one or more mass elements in the first oscillation mode. The first sense signal has a first frequency spectrum. The first frequency spectrum comprises a first central peak and two first side peaks. The two first side peaks lie on opposite sides of the first central peak in the first frequency spectrum.

The method also comprises transmitting a first crosstalk compensation signal to the one or more mass elements, setting the frequency of the first crosstalk compensation signal to w2, and setting the amplitude of the first crosstalk compensation signal to a value which is proportional to a first amplitude difference between the two first side peaks in the first frequency spectrum.

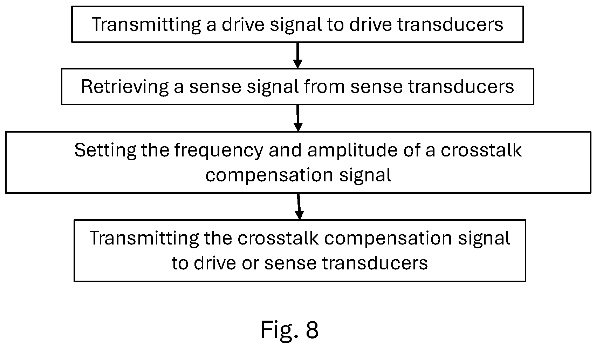

Figure 8 illustrates the method. As before, the two first side peaks may lie closest to the first central peak in the first frequency spectrum.

The method may also comprise retrieving a second sense signal from one or more second sense transducers which are connected to the one or more mass elements. The one or more second sense transducers are configured to measure the movement of the one or more mass elements in the second oscillation mode. The second sense signal has a second frequency spectrum. The second frequency spectrum comprises a second central peak and two second side peaks. The two second side peaks lie on opposite sides of the second central peak in the second frequency spectrum.

The method may also comprise transmitting a second crosstalk compensation signal to the one or more mass elements, setting the frequency of the second crosstalk compensation signal to w1, and setting the amplitude of the second crosstalk compensation signal to a value which is proportional to a second amplitude difference between the two second side peaks in the second frequency spectrum.

The two second side peaks may lie closest to the second central peak in the second frequency spectrum.

As indicated previously, the one or more mass elements may in this method be configured to be mobile in the direction of an x-axis and in the direction of a y-axis. The one or more mass elements may oscillate in linear translation in the direction of the x-axis in the first oscillation mode, and the one or more mass elements oscillate in linear translation in the direction of the y-axis in the second oscillation mode.

Alternatively, the one or more mass elements may in this method be configured to be mobile in rotation about a z-axis which is perpendicular to both the x-axis and the y-axis, and also mobile in rotation about the x-axis. The one or more mass elements may oscillate in rotation about the x-axis in the first oscillation mode, and the one or more mass elements oscillate in rotation about the z-axis in the second oscillation mode.

All options discussed above for generating the first (and optionally also the second) compensation signals can be used in the method.


**Claims**

1. A frequency-modulated microelectromechanical gyroscope which comprises:

   - one or more mass elements which lie in an xy-plane, wherein the x-axis is perpendicular to the y-axis,
   - one or more first and second drive transducers and one or more first sense transducers which are connected to the one or more mass elements,
   - a control unit,
   wherein the control unit is configured transmit a first drive signal to the one or more first drive transducers to drive the one or more mass elements in a first oscillation mode, and the first drive signal has a first frequency w1, and the control unit is configured transmit a second drive signal to the one or more second drive transducers to drive the one or more mass elements in a second oscillation mode, and the second drive signal has a second frequency w2, and w2 differs from w1, and the second oscillation mode is orthogonal to the first oscillation mode, and the one or more first sense transducers are configured to measure the movement of the one or more mass elements in the first oscillation mode, and the control unit is configured to retrieve a first sense signal from the one or more first sense transducers, and the first sense signal has a first frequency spectrum, and the first frequency spectrum comprises a first central peak and two first side peaks, and the two first side peaks lie on opposite sides of the first central peak in the first frequency spectrum,
   **characterized in that** the control unit is configured to continuously:

   - transmit a first crosstalk compensation signal to the one or more mass elements,
   - set the frequency of the first crosstalk compensation signal to w2,
   - set the amplitude of the first crosstalk compensation signal to a value which is proportional to a first amplitude difference between the two first side peaks in the first frequency spectrum.

2. A frequency-modulated microelectromechanical gyroscope according to claim 1, wherein the two first side peaks lie closest to the first central peak in the first frequency spectrum.

3. A frequency-modulated microelectromechanical gyroscope according to any of claims 1 - 2, wherein the gyroscope also comprises one or more second sense transducers, and the one or more second sense transducers are configured to measure the movement of the one or more mass elements in the second oscillation mode, and the control unit is configured to retrieve a second sense signal from the one or more second sense transducers, and the second sense signal has a second frequency spectrum, and the second frequency spectrum comprises a second central peak and two second side peaks, and the two second side peaks lie on opposite sides of the second central peak in the second frequency spectrum, and the control unit is also configured to continuously:

- transmit a second crosstalk compensation signal to the one or more mass elements,
- set the frequency of the second crosstalk compensation signal to w1,
- set the amplitude of the second crosstalk compensation signal to a value which is proportional to a second amplitude difference between the two second side peaks in the second frequency spectrum.

4.  A frequency-modulated microelectromechanical gyroscope according to claim 3, wherein the two second side peaks lie closest to the second central peak in the second frequency spectrum.

5.  A frequency-modulated microelectromechanical gyroscope according to any preceding claim, wherein the one or more first drive transducers and one or more first sense transducers are piezoelectric transducers.

6.  A frequency-modulated microelectromechanical gyroscope according to any preceding claim, wherein the one or more mass elements comprise four mass elements which are pairwise aligned on two x-alignment axes which are parallel to the x-axis and on two y-alignment axes which are parallel to the y-axis, and each pair of mass elements is coupled to each other with one or more anti-phase coupling elements.

7.  A frequency-modulated microelectromechanical gyroscope according to any preceding claim, wherein

    the one or more mass elements are configured to be mobile in the direction of an x-axis and in the direction of a y-axis, and
    the one or more mass elements oscillate in linear translation in the direction of the x-axis in the first oscillation mode, and
    the one or more mass elements oscillate in linear translation in the direction of the y-axis in the second oscillation mode.

8.  A frequency-modulated microelectromechanical gyroscope according to any of claims 1-6, wherein

    the one or more mass elements are configured to be mobile in rotation about a z-axis which is perpendicular to both the x-axis and the y-axis, and also mobile in rotation about the x-axis,
    the one or more mass elements oscillate in rotation about the x-axis in the first oscillation mode, and
    the one or more mass elements oscillate in rotation about the z-axis in the second oscillation mode.

9.  A method for compensating crosstalk effects in a frequency-modulated microelectromechanical gyroscope, wherein the method comprises:

    - transmitting a first drive signal to one or more first drive transducers which drive one or more mass elements in the gyroscope in a first oscillation mode, so that the one or more mass elements oscillate in the first oscillation mode, and the first drive signal has a first frequency w1,
    - transmitting a second drive signal to one or more second drive transducers which drive the one or more mass elements in a second oscillation mode, so that the one or more mass elements oscillate in the second oscillation mode, and the second drive signal has a second frequency w2, and w2 differs from w1, and the second oscillation mode is orthogonal to the first oscillation mode,
    - retrieving a first sense signal from one or more first sense transducers which are connected to the one or more mass elements, wherein the one or more first sense transducers are configured to measure the movement of the one or more mass elements in the first oscillation mode, and the first sense signal has a first frequency spectrum, and the first frequency spectrum comprises a first central peak and two first side peaks, and the two first side peaks lie on opposite sides of the first central peak in the first frequency spectrum,

    **characterized in that** the method comprises:

    - transmitting a first crosstalk compensation signal to the one or more mass elements,
    - setting the frequency of the first crosstalk compensation signal to w2,
    - setting the amplitude of the first crosstalk compensation signal to a value which is proportional to a first amplitude difference between the two first side peaks in the first frequency spectrum.

10. A method according to claim 9, wherein the two first side peaks lie closest to the first central peak in the first frequency spectrum.

11. A method according to any of claims 9 - 10, wherein the method also comprises

- retrieving a second sense signal from one or more second sense transducers which are connected to the one or more mass elements, wherein the one or more second sense transducers are configured to measure the movement of the one or more mass elements in the second oscillation mode, and the second sense signal has a second frequency spectrum, and the second frequency spectrum comprises a second central peak and two second side peaks, and the two second side peaks lie on opposite sides of the second central peak in the second frequency spectrum,
- transmitting a second crosstalk compensation signal to the one or more mass elements,
- setting the frequency of the second crosstalk compensation signal to w1,
- setting the amplitude of the second crosstalk compensation signal to a value which is proportional to a second amplitude difference between the two second side peaks in the second frequency spectrum.

12. A method according to claim 11, wherein the two second side peaks lie closest to the second central peak in the second frequency spectrum.

13. A method according to any of claims 9-12, wherein

the one or more mass elements are configured to be mobile in the direction of an x-axis and in the direction of a y-axis, and
the one or more mass elements oscillate in linear translation in the direction of the x-axis in the first oscillation mode, and
the one or more mass elements oscillate in linear translation in the direction of the y-axis in the second oscillation mode.

14. A method according to any of claims 9-12, wherein

the one or more mass elements are configured to be mobile in rotation about a z-axis which is perpendicular to both the x-axis and the y-axis, and also mobile in rotation about the x-axis,
the one or more mass elements oscillate in rotation about the x-axis in the first oscillation mode, and
the one or more mass elements oscillate in rotation about the z-axis in the second oscillation mode.

Fig. 1a

Fig. 1b

Fig. 1c

Fig. 1d

Fig. 2a

Fig. 2b

Fig. 2c

Fig. 2d

Fig. 3

Fig. 4a

Fig. 4b

Fig. 4c

Fig. 4d

Fig. 5

Fig. 6

Fig. 7

Transmitting a drive signal to drive transducers

Retrieving a sense signal from sense transducers

Setting the frequency and amplitude of a crosstalk
compensation signal

Transmitting the crosstalk compensation signal
to drive or sense transducers

Fig. 8

EUROPEAN SEARCH REPORT

Application Number

EP 24 21 4466

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ONTRONEN ANTTI ET AL: "Quadrature Compensation for a Frequency Modulated piezoMEMS Gyroscope", 2024 IEEE SENSORS, IEEE, 20 October 2024 (2024-10-20), pages 1-4, XP034778686, DOI: 10.1109/SENSORS60989.2024.10784474 [retrieved on 2024-12-17] * the whole document * | 1-14 | INV. G01C19/5726 G01C19/574 G01C19/5712 |
| A | ONTRONEN ANTTI ET AL: "71 kHz Frequency Modulated PiezoMEMS Gyroscope", 2023 IEEE INTERNATIONAL SYMPOSIUM ON INERTIAL SENSORS AND SYSTEMS (INERTIAL), IEEE, 28 March 2023 (2023-03-28), pages 1-4, XP034334310, DOI: 10.1109/INERTIAL56358.2023.10104005 [retrieved on 2023-04-26] * the whole document * | 6-8,13, 14 | |

TECHNICAL FIELDS SEARCHED (IPC)

G01C

The present search report has been drawn up for all claims

| Place of search | Date of completion of the search | Examiner |
|---|---|---|
| The Hague | 12 May 2025 | Tabellion, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)